(19) Europäisches Patentamt / European Patent Office / Office européen des brevets

(11) **EP 3 807 689 B1**

(12) **FASCICULE DE BREVET EUROPEEN**

(45) Date de publication et mention
de la délivrance du brevet:
**13.08.2025 Bulletin 2025/33**

(21) Numéro de dépôt: **19728447.4**

(22) Date de dépôt: **07.06.2019**

(51) Classification Internationale des Brevets (IPC):
**G02B 13/10** *(2006.01)* **F41G 1/32** *(2006.01)*
**G02B 23/02** *(2006.01)* **G02B 23/12** *(2006.01)*

(52) Classification Coopérative des Brevets (CPC):
**G02B 23/12; F41G 1/32; G02B 13/10; G02B 23/02**

(86) Numéro de dépôt international:
**PCT/EP2019/064915**

(87) Numéro de publication internationale:
**WO 2019/238551 (19.12.2019 Gazette 2019/51)**

(54) **JUMELLES DE VISION DE NUIT ANAMORPHIQUES**

ANAMORPHOTISCHES NACHTSICHTFERNGLAS

ANAMORPHIC NIGHT VISION BINOCULARS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2018 FR 1800614**

(43) Date de publication de la demande:
**21.04.2021 Bulletin 2021/16**

(73) Titulaire: **THALES**
**92190 Meudon (FR)**

(72) Inventeur: **NARCY, Gabriel**
**42570 Saint Heand (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
FR-A- 1 243 041     FR-A- 1 273 088
FR-A1- 3 032 040     JP-B2- 3 021 985
US-A- 3 200 250     US-A1- 2004 021 938

**Description**

Le domaine de l'invention est celui des jumelles de vision de nuit comportant un intensificateur de lumière.

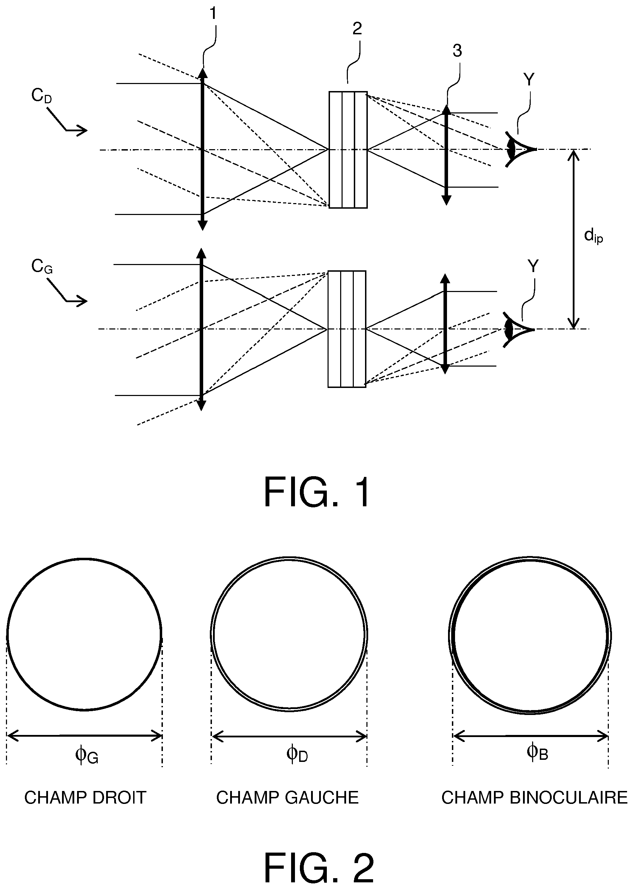

Généralement, comme représenté sur la figure 1, une jumelle de vision de nuit comporte deux corps identiques $C_D$ et $C_G$, parallèles entre eux et mécaniquement accouplés. Chaque corps comporte un objectif optique 1, un tube à intensificateur de lumière 2 et un oculaire 3. Sur cette figure, les optiques sont représentées par des flèches doubles et le parcours des rayons par des traits fins continus ou en pointillés. Le grandissement de la jumelle est égal ou voisin de 1. La distance séparant les deux corps correspond à la distance interpupillaire $d_{ip}$ entre les deux yeux Y, soit environ 65 millimètres.

Les champs de vision monoculaires de chaque corps ont un diamètre angulaire $\phi_G$ et $\phi_D$ généralement voisin de 40 degrés. Si les axes optiques des deux corps de jumelle sont parallèles, le champ binoculaire $\phi_B$ vaut également 40 degrés comme on le voit sur la figure 2. Il est difficile d'augmenter ce champ sans diminuer la résolution du système optique. En effet, plus les champs sont importants, plus la distorsion des optiques en bord de champ est importante et plus la résolution diminue en bord de champ.

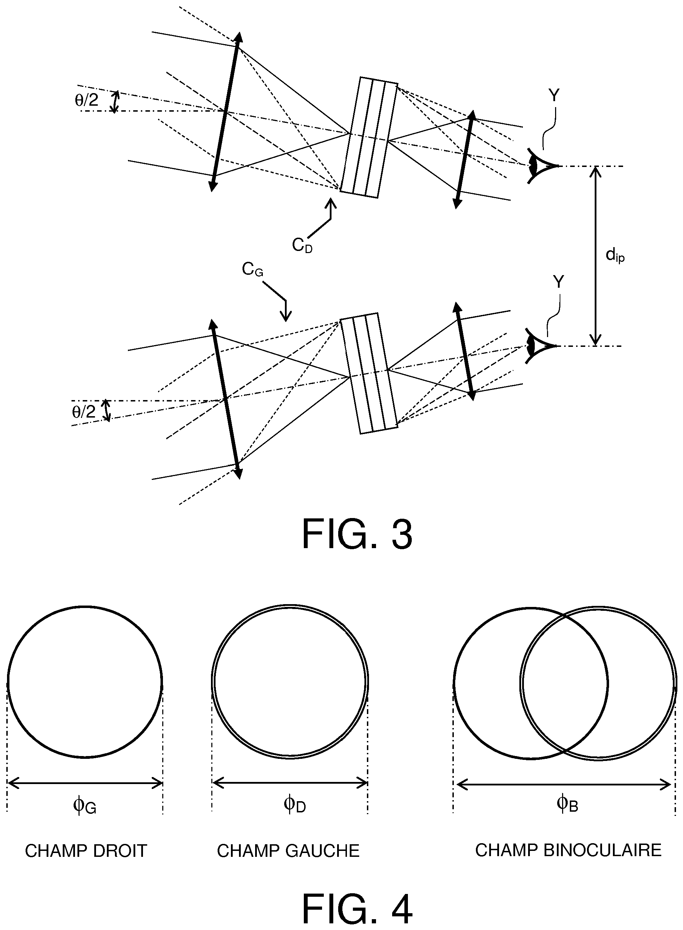

Pour augmenter le champ binoculaire, une solution possible est représentée sur les figures 3 et 4. Elle consiste à basculer les deux axes optiques de chaque corps d'un demi-angle connu $\theta/2$ comme on le voit sur la figure 3. Le champ monoculaire est conservé, mais le champ binoculaire, dans la direction de basculement est augmenté de l'angle $\theta$. Ainsi, si les champs monoculaires sont circulaires et d'un diamètre de 40 degrés et si l'angle de basculement vaut 20 degrés, le champ binoculaire $\phi_B$ est de 60 degrés dans la direction de basculement.

Cette solution simple a plusieurs inconvénients. L'entre-axe entre les pupilles d'entrée des deux objectifs augmente de façon significative, ce qui modifie sensiblement l'effet stéréoscopique naturel. Ceci est vrai aussi bien pour une solution à champ divergent comme représenté sur la figure 3 qu'une solution à champ convergent. Ainsi, si chaque corps a une longueur d'environ 100 mm, l'entre-axe augmente de 32 mm, soit un entre-axe total de 97 mm pour une augmentation de champ total de 60°. Cela revient à augmenter l'écart interpupillaire de 50%.

Pour pallier cet inconvénient, le brevet FR 2 721 719 intitulé « Jumelle compacte de vision nocturne » propose de replier les optiques au moyen de miroirs internes de façon à diminuer l'entre-axe entre les objectifs. Cette solution optique a nécessairement ses limites.

Les jumelles de vision de nuit selon l'invention sont définies dans la revendication indépendante 1 et ne présentent pas les inconvénients précédents. Elles reposent sur le fait qu'il est possible d'augmenter le champ de l'objectif et de l'oculaire dans une direction donnée au moyen d'un dispositif anamorphoseur. On peut augmenter le champ dans cette direction d'au moins 25% sans modifications de l'objectif ou de l'oculaire.

Plus précisément, l'invention a pour objet des jumelles de vision de nuit telles que définies dans la revendication indépendante 1.

Avantageusement, les axes optiques des deux ensembles font entre eux un premier angle différent de zéro.

Avantageusement, les deux plans d'anamorphose des deux corps sont parallèles.

Avantageusement, les deux plans d'anamorphose des deux corps font entre eux un second angle différent de zéro.

Avantageusement, le premier dispositif anamorphoseur et/ou le second dispositif anamorphoseur comporte au moins un prisme.

Avantageusement, lorsque le premier dispositif anamorphoseur et/ou le second dispositif anamorphoseur comporte un unique prisme, ledit prisme fonctionne au minimum de déviation.

Avantageusement, le premier dispositif anamorphoseur et/ou le second dispositif anamorphoseur comporte deux prismes.

Avantageusement, les deux prismes sont collés par une face commune.

Avantageusement, les indices optiques du premier prisme et du second prisme et les constringences du premier prisme et du second prisme sont tels que le chromatisme du dispositif anamorphoseur est voisin de zéro dans une bande spectrale connue.

Avantageusement, le second dispositif anamorphoseur comporte un prisme associé à un prisme de Fresnel. Avantageusement, les champs visuels de l'objectif et de l'oculaire sont circulaires d'un diamètre égal à 40 degrés, le rapport d'anamorphose étant égal à 0,8.

Avantageusement, les axes optiques des deux corps font entre eux un premier angle égal à 25 degrés.

Avantageusement, les deux plans d'anamorphose des deux corps font entre eux un second angle égal à 30 degrés.

L'invention sera mieux comprise et d'autres avantages apparaîtront à la lecture de la description qui va suivre donnée à titre non limitatif et grâce aux figures annexées parmi lesquelles :

La figure 1 représente une réalisation de jumelles de vision de nuit selon l'art antérieur ;
La figure 2 représente les champs visuels monoculaire et binoculaire des jumelles de la figure 1 ;

La figure 3 représente une variante de réalisation des jumelles de vision de nuit de la figure 1 ;

La figure 4 représente les champs visuels monoculaire et binoculaire des jumelles de la figure 3 ;

La figure 5 représente un corps de jumelle comportant des dispositifs anamorphoseurs selon l'invention ;

La figure 6 représente les différents champs visuels dans le corps de jumelle de la figure 5 ;

La figure 7 des jumelles selon l'invention ;

La figure 8 représente les champs visuels monoculaire et binoculaire des jumelles de la figure 7 ;

La figure 9 représente une variante de réalisation des jumelles de vision de nuit de la figure 7 ;

La figure 10 représente le champ visuel binoculaire d'une variante de réalisation des jumelles de la figure 7 ;

La figure 11 représente un prisme anamorphoseur fonctionnant à l'angle de déviation minimal ;

La figure 12 représente une configuration de prisme anamorphoseur ;

La figure 13 représente un dispositif anamorphoseur comportant deux prismes disposés tête-bêche ;

La figure 14 représente un dispositif anamorphoseur à deux prismes collés disposés devant l'oculaire ;

La figure 15 représente un dispositif anamorphoseur comportant un prisme et un prisme de Fresnel disposés devant l'oculaire.

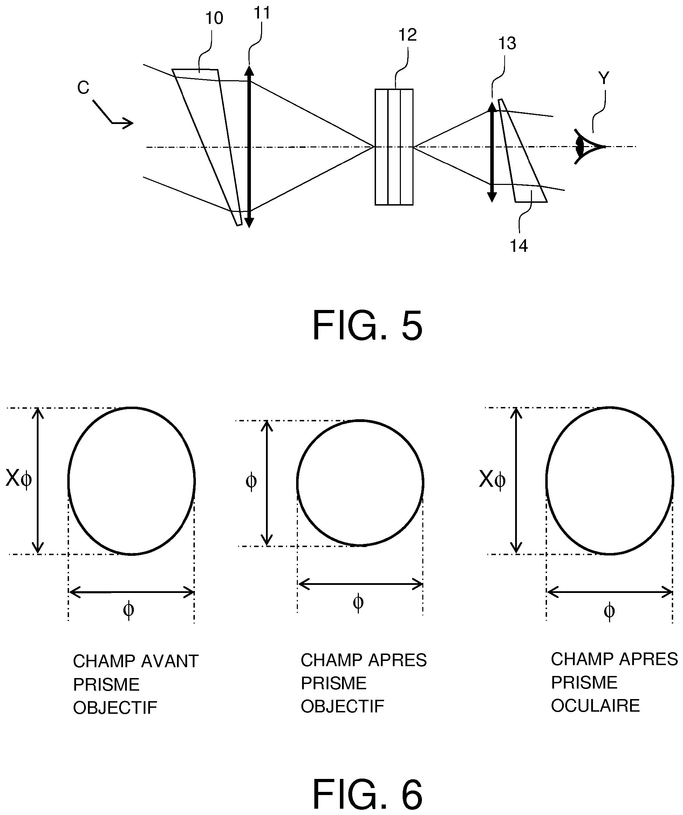

La figure 5 représente un corps de jumelles C selon l'invention. Il comporte, dans cet ordre, un premier dispositif anamorphoseur 10 à prisme, un objectif 11, un dispositif à intensificateur de lumière 12, un oculaire 13 et un second dispositif anamorphoseur 14 à prismes. Sur cette figure 5, les optiques 11 et 13 sont représentées par des flèches doubles et les dispositifs anamorphoseurs 10 et 14 par de simples prismes. Comme on le verra, ces dispositifs peuvent être plus complexes.

Le premier dispositif anamorphoseur introduit une première anamorphose dans un plan donné d'un rapport 1/X strictement inférieur à 1, le second dispositif anamorphoseur introduit une seconde anamorphose dans le même plan d'un rapport X.

Cette disposition permet d'agrandir, dans une direction, le champ visuel du corps de jumelle d'une valeur égale au rapport 1/X. Ainsi, si le champ de l'objectif hors anamorphose est circulaire, le champ perçu à travers le premier dispositif anamorphoseur est elliptique. Le rapport du grand axe de l'ellipse sur son petit axe est égal au rapport d'anamorphose. La figure 6 illustre ce fonctionnement. Elle représente les champs visuels avant le premier prisme anamorphoseur, après le premier prisme anamorphoseur et après le premier prisme oculaire. Si le champ après le premier prisme est circulaire d'un diamètre $\phi$, avant le premier anamorphoseur et après le second anamorphoseur, ce champ est elliptique. Le petit axe de l'ellipse vaut $\phi$ et le grand axe X.$\phi$.

A titre d'ordre de grandeur, les champs visuels de l'objectif et de l'oculaire sont circulaires d'un diamètre égal à 40 degrés, le rapport d'anamorphose étant égal à 0,8. Les champs visuels avant le premier anamorphoseur et après le second anamorphoseur sont donc elliptiques, le grand axe de l'ellipse valant 50 degrés et le petit axe 40 degrés.

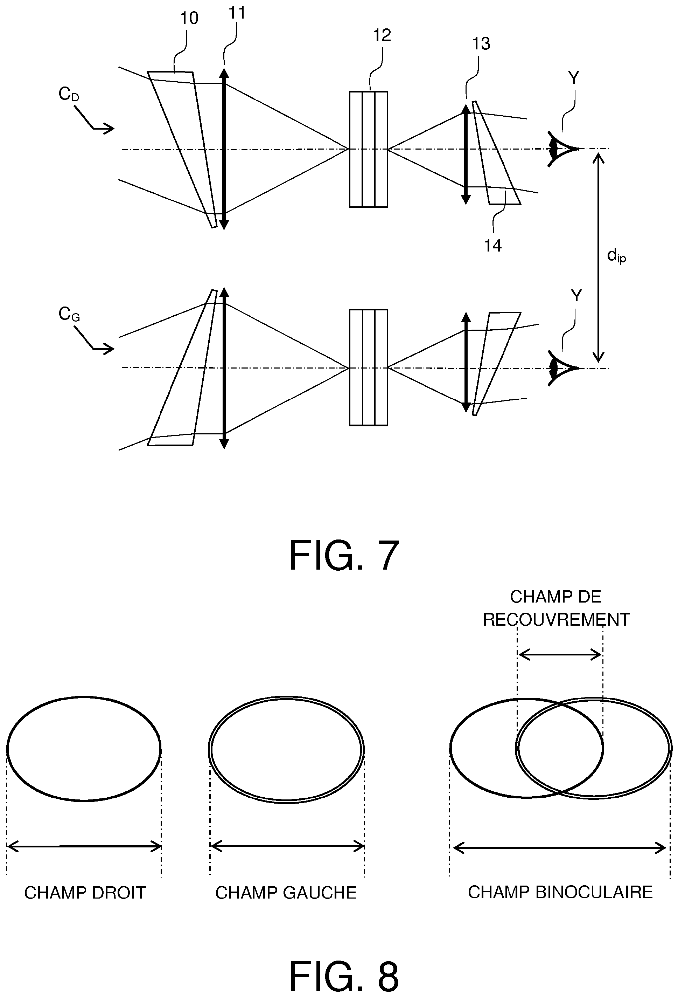

Une jumelle selon l'invention comporte donc deux corps identiques tels que décrits précédemment. Une telle jumelle est représentée sur la figure 7. Sur cette figure, les axes optiques des sous-ensembles objectif-intensificateur-oculaire sont parallèles et la distance séparant ces deux axes est sensiblement égale à la distance interpupillaire de l'être humain, soit environ 65 millimètres.

Un des avantages de cette disposition est que les dispositifs anamorphoseurs peuvent être ajoutés sur des jumelles de vision de nuit classiques sans avoir à modifier la combinaison optique initiale.

Les dispositifs anamorphoseurs ont une deuxième caractéristique. Ils introduisent une déviation de l'axe optique. Ainsi, les champs visuels avant le premier anamorphoseur et après le second anamorphoseur sont déviés et par conséquent les champs monoculaires vus par l'œil droit et par l'œil droit ne se recoupent pas totalement dans la direction d'anamorphose. Seul une partie du champ visuel appelé champ de recouvrement est vu par les deux yeux. C'est ce qui est illustré sur la figure 8. Le champ binoculaire total vaut alors, dans la direction d'anamorphose, deux fois le champ monoculaire moins le champ de recouvrement.

A titre d'exemple, si le champ monoculaire est une ellipse de grand axe 50 degrés et de petit axe 40 degrés et si les anamorphoseurs introduisent une déviation de l'axe optique de 12,5 degrés, dans la direction d'anamorphose, le champ binoculaire total vaut 75 degrés et 40 degrés dans la direction perpendiculaire, le champ de recouvrement valant 25 degrés.

La déviation du prisme n'est pas constante dans le champ. Elle est plus importante pour les grandes incidences que pour les faibles. Par conséquent, la résolution de chaque corps de jumelle n'est plus à symétrie de révolution. On peut alors, selon les caractéristiques du prisme choisi, privilégier la résolution à l'intérieur du champ de recouvrement.

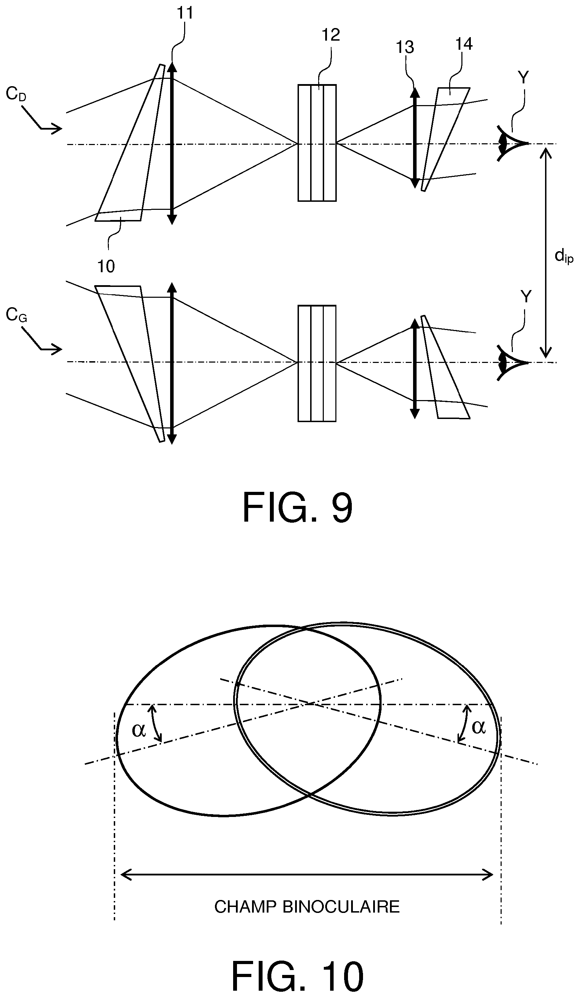

La figure 9 représente une variante de la figure 7. Par rapport à la figure 9, les deux corps de jumelles sont inversés. Ainsi, les axes centraux des champs monoculaires sont inversés. Par rapport à la disposition de la figure 7, l'œil droit voit ce que voyait l'œil gauche et réciproquement. Les champs binoculaires et de recouvrement sont identiques dans les deux configurations.

Ces champs binoculaires panoramiques importants dans le plan horizontal et plus faibles dans le plan vertical sont bien adaptés à la vision humaine binoculaire. Dans ces configurations, l'anamorphose étant faite dans un plan déterminé, les deux plans d'anamorphose des deux corps de jumelles sont parallèles. Il est possible d'optimiser encore le champ binoculaire en jouant sur les plans d'anamorphose. Si les deux plans d'anamorphose des deux corps font entre eux un second angle $2\alpha$ différent de zéro comme on le voit sur la figure 10, alors le champ binoculaire a une forme incurvée qui épouse de façon optimale la vision humaine. A titre d'exemple de réalisation, si les champs monoculaires anamorphosés valent 50 degrés par 40 degrés, le champ binoculaire total vaut 75 degrés par 40 degrés, chaque plan d'anamorphose étant incliné de 15 degrés par rapport à un plan horizontal.

Lorsque le dispositif anamorphoseur comporte un unique prisme P, pour une incidence donnée d'un rayon lumineux sur un prisme, la déviation de ce rayon lumineux dépend de trois facteurs qui sont: l'angle A au sommet du prisme, son indice optique n à la longueur d'onde de ce rayon lumineux et l'incidence i du rayon par rapport à la normale au prisme. A cette incidence i correspond une inclinaison B de la face arrière du prisme par rapport à l'axe optique xx de l'objectif O.

Plusieurs dimensionnements du prisme conduisent au même champ total et au même champ de recouvrement. Une solution possible consiste à utiliser la propriété du minimum de déviation des prismes pour conserver les focales sagittales et tangentielles de l'objectif placé en aval au centre de la zone de recouvrement.

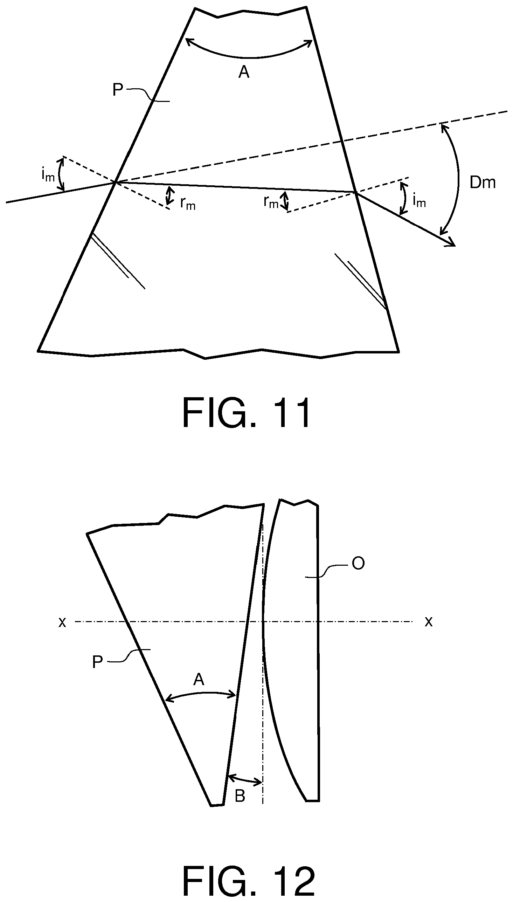

Avec les notations précédentes et en appelant $i_m$ l'incidence correspondant au minimum de déviation, ce minimum de déviation Dm représenté en figure 11 vaut :

$$Dm = 2.i_m - A = 2.Arc\sin\left(n.\sin\left(\frac{A}{2}\right)\right) - A$$

Au voisinage de ce minimum, on a la relation :

$$\frac{dD}{di} = 0$$

A objectif donné, le rapport d'anamorphose X exprimé en pourcentage désiré entre le bord de champ panoramique et le centre du champ de recouvrement ainsi que le rapport 1/Y du champ de recouvrement pour laquelle les focales d'objectif sont conservées déterminent l'angle au sommet du prisme ainsi que l'inclinaison de sa face arrière par rapport à l'axe optique de l'objectif tel que représenté sur la figure 12. Plus précisément, ces paramètres sont déterminés par la résolution numérique du système d'équations suivantes :

$$D_{(B-T)} - D_{\left(B+\frac{1}{Y}T\right)} = X.\left(\frac{Y+1}{Y}T\right)$$

Avec les notations suivantes :

$$B + \frac{1}{Y}T = Arc\sin\left(n.\sin\left(\frac{A}{2}\right)\right)$$

$$D_{(B-T)} = A - (B-T) + a\sin\left(n.\sin\left(a\sin\left(\frac{\sin(B-T)}{n}\right) - A\right)\right)$$

$$D_{\left(B+\frac{1}{Y}T\right)} = 2.Arc\sin\left(n.\sin\left(\frac{A}{2}\right)\right) - A$$

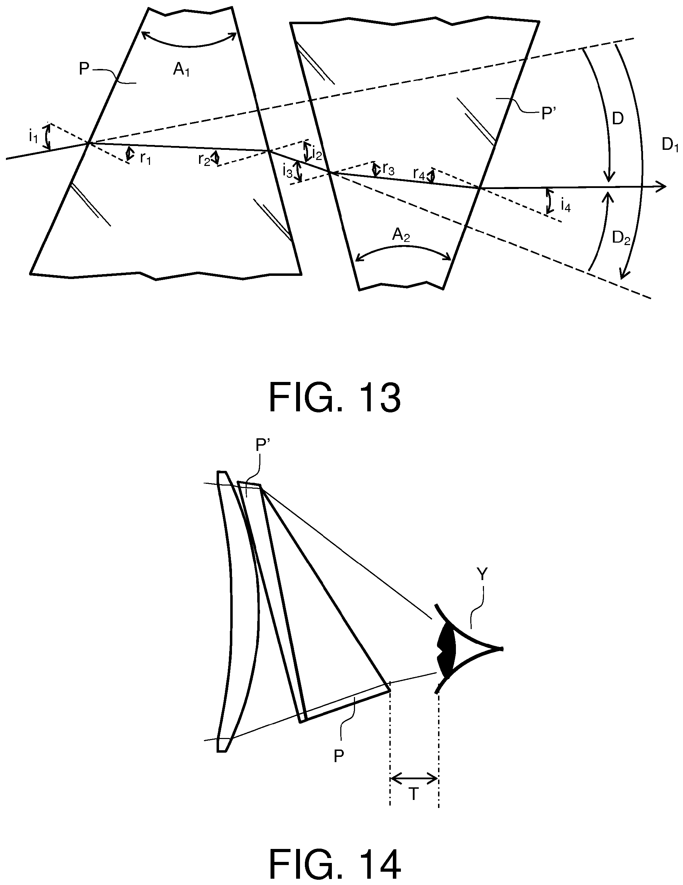

Pour corriger le chromatisme d'un dispositif anamorphoseur, il est nécessaire de disposer d'un ensemble comportant deux prismes P et P' montés tête-bêche comme représenté sur la figure 13. Généralement, les deux prismes sont accolés de façon à former un seul ensemble optique compact. Si on note $n(\lambda)$ l'indice du prisme à la longueur d'onde $\lambda$ et v sa constringence, on a la relation classique :

$$\frac{dn(\lambda)}{d\lambda} = \frac{\bar{n}-1}{v}$$

En notant $A_1$ l'angle au sommet du premier prisme, $A_2$ l'angle au sommet du second prisme ou contre prisme, $n_1$ l'indice optique du premier prisme, $n_2$ l'indice optique du second prisme, $i_1$ l'angle d'incidence sur la première face du premier prisme, $r_1$ l'angle réfracté sur la première face du premier prisme, $r_2$ l'angle d'incidence sur la seconde face du premier prisme, $i_2$ l'angle réfracté sur la seconde face du premier prisme, $i_3$ l'angle d'incidence sur la première face du second prisme, $r_3$ l'angle réfracté sur la première face du second prisme, $r_4$ l'angle d'incidence sur la seconde face du second prisme, $i_4$ l'angle réfracté sur la seconde face du second prisme, en notant $D_1(\lambda)$ l'angle de déviation du premier prisme et $D_2(\lambda)$ l'angle de déviation du second prisme, on a les relations :

$$D_1(\lambda) = A_1 - i_1 + a\sin\left(n_1 . \sin\left(a\sin\left(\frac{\sin(i_1)}{n_1}\right) - A_1\right)\right)$$

$$D_2(\lambda) = A_2 - i_3 + a\sin\left(n_2 . \sin\left(a\sin\left(\frac{\sin(i_2)}{n_2}\right) - A_2\right)\right)$$

La condition d'achromaticité de l'ensemble des deux prismes est donc :

$$\frac{dD(\lambda)}{d\lambda} = 0 = \frac{dD_1(\lambda)}{d\lambda} + \frac{dD_2(\lambda)}{d\lambda}$$

Elle vaut :

$$\frac{\sin(A_1)}{\cos(i_2).\cos(r_1)} . \frac{n_1 - 1}{v_1} + \frac{\sin(A_2)}{\cos(i_4).\cos(r_3)} . \frac{n_2 - 1}{v_2} = 0$$

L'approximation des petits angles permet de définir les angles $A_1$ et $A_2$, les indices optiques $n_1$ et $n_2$ et les constringences $v_1$ et $v_2$ afin de replier le chromatisme latéral dans la zone de résolution privilégiée qui correspond à la zone de linéarité des sinus, c'est-à-dire dans la zone où le sinus d'un angle est assimilé à cet angle et où son cosinus est pris égal à 1. On obtient alors la relation simple :

$$A_1 . \frac{n_1 - 1}{v_1} + A_2 . \frac{n_2 - 1}{v_2} = 0$$

Lorsque l'on s'écarte de cette approximation, les valeurs des cosinus s'écartant de 1, il est possible d'affiner les valeurs de $A_1$ et $A_2$ par optimisation en mettant comme contrainte les valeurs de chromatisme latéral résiduels cibles.
A titre de premier exemple non limitatif de réalisation d'un ensemble optique anamorphoseur corrigé du chromatisme comportant deux prismes collés, les deux prismes ont les caractéristiques suivantes :

Prisme :

Matière : Référence 497816 selon International Glass Code
Indice optique : 1.497
Constringence : 81.5

Contre Prisme :

Matière : Référence 923189 selon International Glass Code
Indice optique : 1.923
Constringence : 18.9

Angle au sommet du prisme : 17.5 degrés
Angle d'inclinaison de la face de sortie du contre prisme par rapport à l'axe optique de l'objectif : 15 degrés

Ce dimensionnement permet l'extension à +/- 37,5° de champ dichoptique du champ horizontal d'une jumelle de vision nocturne binoculaire de champ circulaire de +/-20° de champ par l'ajout des dispositifs anamorphoseurs, les axes optiques des deux corps hors dispositifs anamorphoseurs étant parallèles. Le champ de recouvrement est alors de +/-12,5°.

A titre de second exemple non limitatif de réalisation d'un ensemble optique anamorphoseur corrigé du chromatisme comportant deux prismes collés, les deux prismes ont les caractéristiques suivantes :

Prisme :

Matière : Référence 497816 selon International Glass Code
Indice optique : 1.497
Constringence : 81.5

Contre Prisme :

Matière : Référence 923189 selon International Glass Code
Indice optique : 1.923
Constringence : 18.9

Angle au sommet du prisme : 33.3 degrés
Angle d'inclinaison de la face de sortie du contre prisme par rapport à l'axe optique de l'objectif : -10 degrés

Ce dimensionnement permet l'extension à +/- 37,5° de champ dichoptique du champ horizontal d'une jumelle de vision nocturne binoculaire de champ circulaire de +/-20° de champ par l'ajout des dispositifs anamorphoseurs, les axes optiques des deux corps hors dispositifs anamorphoseurs faisant entre eux un angle de +/- 7 degrés. Les deux corps peuvent travailler en dichoptie convergente ou divergente. Le champ de recouvrement est alors de +/-17,5°. Les focales d'objectif au voisinage du champ égal à -5.5 degrés sont conservées.

A titre de troisième exemple non limitatif de réalisation d'un ensemble optique anamorphoseur corrigé du chromatisme comportant deux prismes collés, les deux prismes ont les caractéristiques suivantes :

Prisme :

Matière : Référence 497816 selon International Glass Code
Indice optique : 1.497
Constringence : 81.5

Contre Prisme :

Matière : Référence 923189 selon International Glass Code
Indice optique : 1.923
Constringence : 18.9

Angle au sommet du prisme : 30 degrés
Angle d'inclinaison de la face de sortie du contre prisme par rapport à l'axe optique de l'objectif : 0 degré

Ce dimensionnement permet l'extension à +/- 42,5° de champ dichoptique du champ horizontal d'une jumelle de vision nocturne binoculaire de champ circulaire de +/-20° de champ par l'ajout des dispositifs anamorphoseurs, les axes optiques des deux corps hors dispositifs anamorphoseurs faisant entre eux un angle de +/- 10 degrés. Les deux corps peuvent travailler en dichoptie convergente ou divergente. Le champ de recouvrement est alors de +/-17,5°.

Un prisme simple a nécessairement une base relativement large. Lorsque ce prisme est disposé devant l'oculaire, il réduit le tirage d'œil T qui correspond à la position de la boite à œil par rapport au dernier dioptre de l'oculaire comme on le peut le voir sur la figure 14.

Ce tirage d'œil peut être optimisé en remplaçant au moins un des deux prismes oculaires par un composant plus mince mais optiquement équivalent ou proche équivalent en termes de déviation optique permettant la compensation de l'anamorphose introduite par le jeu de prismes en entrée d'objectif. Ce composant peut par exemple être dimensionné à partir du prisme originel simple de plusieurs façons différentes.

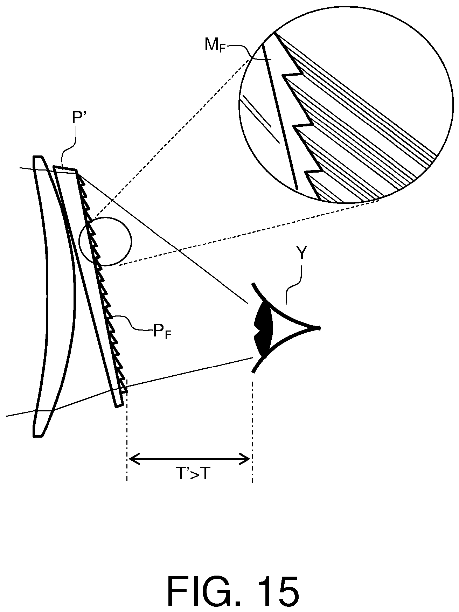

Dans un premier mode de réalisation, le prisme P est remplacé par un prisme de Fresnel $P_F$. Ce mode de réalisation est illustré en figure 15. Un prisme de Fresnel $P_F$ comporte N motifs $M_F$ élémentaires successifs identiques. Chaque motif élémentaire reprend la géométrie du prisme mais en décalant la face de 1/(N-1) fois la hauteur du prisme pour chaque niveau. Le nombre N de niveaux est suffisamment faible dans ce cas pour éviter tout phénomène d'images parasites liées à la diffraction par un effet réseau afin que le composant puisse fonctionner sur un spectre large. L'effet d'ombrage introduit par les contremarches du prisme est peu gênant, car l'œil intègre chaque champ sur une pupille de diamètre supérieur à 3 millimètres. Il est d'autant moins gênant que le nombre de niveaux est élevé. La vue agrandie de la figure 15 représente cet effet d'ombrage. Seuls les rayons lumineux représentés en traits fins sont transmis. Les zones mortes ont une largeur inférieure à la taille de la pupille humaine. Le tirage d'œil T' est supérieur au tirage T de la figure précédente.

D'autres solutions de réduction d'encombrement et de masse sont possibles :

- Utilisation d'un réseau localement blazé dans le cas d'un fonctionnement des jumelles sur un spectre étroit ;
- Utilisation d'un composant optique holographique ;
- Utilisation d'optiques désanamorphosant l'image issue de l'oculaire. On citera les systèmes à lentilles cylindriques qui permettent de réaliser cette fonction ;
- Ajustement du champ de recouvrement par orientation des corps de jumelles.

Cette solution peut également être mise en œuvre au niveau de l'objectif.

**Revendications**

1. Jumelles de vision de nuit comportant deux corps (CD, CG) assemblés optiquement identiques, chaque corps comportant un ensemble comprenant un objectif (11), un dispositif à intensificateur de lumière (12) et un oculaire (13), **caractérisé en ce que** les jumelles de vision de nuit comportent deux ensembles anamorphoseurs identiques, chaque ensemble comportant un premier dispositif anamorphoseur amovible et un second dispositif anamorphoseur amovible, chaque corps comporte le premier dispositif anamorphoseur (10) à prisme disposé devant l'objectif, le second dispositif anamorphoseur (14) disposé derrière l'oculaire, le premier dispositif anamorphoseur introduisant une première anamorphose dans un plan donné d'un rapport strictement inférieur à 1, le second dispositif anamorphoseur introduisant une seconde anamorphose dans le même plan de l'inverse dudit rapport, un champ visuel avant le premier dispositif anamorphoseur et un champ visuel après le second dispositif anamorphoseur étant elliptiques et un premier angle entre des axes optiques des deux corps, un second angle entre les deux plans d'anamorphose des deux corps et ledit rapport d'anamorphose étant configurés, en fonction du champ visuel de l'objectif et de l'oculaire, de façon à ce qu'un champ visuel binoculaire desdites jumelles de vision de nuit soit adapté à celui de la vision humaine.

2. Jumelles de vision de nuit selon la revendication 1. **caractérisé en ce que** les axes optiques des deux ensembles font entre eux un premier angle différent de zéro.

3. Jumelles de vision de nuit selon l'une des revendications précédentes, **caractérisé en ce que** les deux plans d'anamorphose des deux corps sont parallèles.

4. Jumelles de vision de nuit selon l'une des revendications 1 à 3, **caractérisé en ce que** les champs visuels de l'objectif et de l'oculaire étant circulaires d'un diamètre égal à 40 degrés, le rapport d'anamorphose étant égal à 0,8, les axes optiques des deux corps font entre eux un premier angle égal à 25 degrés et les deux plans d'anamorphose des deux corps font entre eux un second angle égal à 30 degrés, de façon à épouser le champ binoculaire de la vision humaine.

5. Jumelles de vision de nuit selon l'une des revendications précédentes, **caractérisé en ce que** le premier dispositif anamorphoseur et/ou le second dispositif anamorphoseur comporte au moins un prisme (P).

6. Jumelles de vision de nuit selon la revendication 5. **caractérisé en ce que**, lorsque le premier dispositif anamorphoseur et/ou le second dispositif anamorphoseur comporte un unique prisme, ledit prisme fonctionne au minimum de déviation.

7. Jumelles de vision de nuit selon l'une des revendications 1 à 5, **caractérisé en ce que** le premier dispositif anamorphoseur et/ou le second dispositif anamorphoseur comporte deux prismes (P, P').

8. Jumelles de vision de nuit selon la revendication 7. **caractérisé en ce que** les deux prismes sont collés par une face commune.

9. Jumelles de vision de nuit selon l'une des revendications 7 ou 8, **caractérisé en ce que** les indices optiques du premier prisme et du second prisme et les constringences du premier prisme et du second prisme sont tels que le chromatisme du dispositif anamorphoseur est voisin de zéro dans une bande spectrale connue.

10. Jumelles de vision de nuit selon l'une des revendications 1 à 5, **caractérisé en ce que** le second dispositif anamorphoseur comporte un prisme associé à un prisme de Fresnel ($P_F$), le prisme de Fresnel comportant N motifs élémentaires successifs identiques, le nombre N étant suffisamment faible pour éviter tout phénomène d'images parasites et suffisamment grand pour éviter tout effet d'ombrage.

11. Jumelles de vision de nuit selon l'une des revendications précédentes, **caractérisé en ce que** les champs visuels de l'objectif et de l'oculaire sont circulaires d'un diamètre égal à 40 degrés, le rapport d'anamorphose étant égal à 0,8.

12. Jumelles de vision de nuit selon la revendication 11. **caractérisé en ce que** les axes optiques des deux corps font entre eux un premier angle égal à 25 degrés.

13. Jumelles de vision de nuit selon l'une des revendications 11 ou 12, **caractérisé en ce que** les deux plans d'anamorphose des deux corps font entre eux un second angle égal à 30 degrés.

**Patentansprüche**

1. Nachtsichtfernglas mit zwei optisch identischen, miteinander verbundenen Gehäusen (CD, CG), wobei jedes Gehäuse eine Anordnung mit einem Objektiv (11), einer Lichtverstärkervorrichtung (12) und einem Okular (13) umfasst, **dadurch gekennzeichnet, dass** das Nachtsichtfernglas zwei identische Anamorphosevorrichtungen umfasst, wobei jede Anordnung eine erste abnehmbare Anamorphosevorrichtung und eine zweite abnehmbare Anamorphosevorrichtung umfasst, jeder Körper die erste Anamorphosevorrichtung (10) mit einem vor dem Objektiv angeordneten Prisma und die zweite Anamorphosevorrichtung (14) mit einem hinter dem Okular angeordneten Prisma umfasst, wobei die erste Anamorphosevorrichtung eine erste Anamorphose in einer gegebenen Ebene mit einem Verhältnis von streng kleiner als 1 einträgt, die zweite Anamorphosevorrichtung eine zweite Anamorphose in derselben Ebene mit dem Kehrwert des genannten Verhältnisses einträgt, ein Sichtfeld vor der ersten Anamorphosevorrichtung und ein Sichtfeld nach der zweiten Anamorphosevorrichtung elliptisch sind und ein erster Winkel zwischen optischen Achsen der beiden Körper, ein zweiter Winkel zwischen den beiden Anamorphoseebenen der beiden Körper und das Anamorphoseverhältnis so konfiguriert sind, dass ein binokulares Sichtfeld des Nachtsichtfernglases an dasjenige des menschlichen Sehens angepasst ist.

2. Nachtsichtfernglas nach Anspruch 1, **dadurch gekennzeichnet, dass** die optischen Achsen der beiden Anordnungen einen ersten Winkel zueinander bilden, der ungleich Null ist.

3. Nachtsichtfernglas nach einem der vorhergehenden Ansprüche, **dadurch gekennzeichnet, dass** die beiden Anamorphoseebenen der beiden Körper parallel sind.

4. Nachtsichtfernglas nach einem der Ansprüche 1 bis 3, **dadurch gekennzeichnet, dass** die Sichtfelder des Objektivs und des Okulars kreisförmig mit einem Durchmesser von 40 Grad sind, das Anamorphoseverhältnis 0,8 beträgt, die optischen Achsen der beiden Körper einen ersten Winkel von 25 Grad zueinander bilden und die beiden Anamorphoseebenen der beiden Körper einen zweiten Winkel von 30 Grad zueinander bilden, sodass sie dem binokularen Sichtfeld des menschlichen Sehens entsprechen.

5. Nachtsichtfernglas nach einem der vorhergehenden Ansprüche, **dadurch gekennzeichnet, dass** die erste Anamorphosevorrichtung und/oder die zweite Anamorphosevorrichtung mindestens ein Prisma (P) umfasst.

6. Nachtsichtfernglas nach Anspruch 5, **dadurch gekennzeichnet, dass**, wenn die erste Anamorphosevorrichtung und/oder die zweite Anamorphosevorrichtung ein einziges Prisma umfasst, das Prisma mit minimaler Ablenkung arbeitet.

7. Nachtsichtfernglas nach einem der Ansprüche 1 bis 5, **dadurch gekennzeichnet, dass** die erste Anamorphosevorrichtung und/oder die zweite Anamorphosevorrichtung zwei Prismen (P, P') umfasst.

8. Nachtsichtfernglas nach Anspruch 7, **dadurch gekennzeichnet, dass** die beiden Prismen an einer gemeinsamen Fläche miteinander verklebt sind.

9. Nachtsichtfernglas nach einem der Ansprüche 7 oder 8, **dadurch gekennzeichnet, dass** die optischen Indizes des ersten Prismas und des zweiten Prismas und die Verengungen des ersten Prismas und des zweiten Prismas so sind, dass die Chromatik der Anamorphosevorrichtung in einem bekannten Spektralbereich nahe null ist.

10. Nachtsichtfernglas nach einem der Ansprüche 1 bis 5, **dadurch gekennzeichnet, dass** die zweite Anamorphosevorrichtung ein Prisma umfasst, das einem Fresnel-Prisma ($P_F$) zugeordnet ist, wobei das Fresnel-Prisma N aufeinanderfolgende identische Elementarmotive umfasst, wobei die Anzahl N ausreichend gering ist, um jegliches Störbildphänomen zu vermeiden, und ausreichend groß ist, um jeglichen Abschattungseffekt zu vermeiden.

11. Nachtsichtfernglas nach einem der vorhergehenden Ansprüche, **dadurch gekennzeichnet, dass** die Sichtfelder des Objektivs und des Okulars kreisförmig mit einem Durchmesser von 40 Grad sind, wobei das Anamorphoseverhältnis 0,8 beträgt.

12. Nachtsichtfernglas nach Anspruch 11, **dadurch gekennzeichnet, dass** die optischen Achsen der beiden Körper einen ersten Winkel von 25 Grad zueinander bilden.

13. Nachtsichtfernglas nach einem der Ansprüche 11 oder 12, **dadurch gekennzeichnet, dass** die beiden Anamorphoseebenen der beiden Körper einen zweiten Winkel von 30 Grad zueinander bilden.

## Claims

1. Night vision binoculars comprising two optically identical assembled bodies (CD, CG), each body comprising an assembly comprising an objective lens (11), a light intensifier device (12) and an eyepiece (13), **characterised in that** the night vision binoculars comprise two identical anamorphoser assemblies, with each assembly comprising a first detachable anamorphoser device and a second detachable anamorphoser device, each body comprises the first anamorphoser device (10) with a prism disposed in front of the objective lens, the second anamorphoser device (14) disposed behind the eyepiece, the first anamorphoser device introducing a first anamorphosis in a given plane with a ratio of strictly less than 1, the second anamorphoser device introducing a second anamorphosis in the same plane in the inverse of said ratio, with a visual field before the first anamorphoser device and a visual field after the second anamorphoser device being elliptical and a first angle between optical axes of the two bodies, a second angle between the two anamorphosis planes of the two bodies and said anamorphosis ratio being configured, as a function of the visual field of the objective lens and of the eyepiece, so that a binocular visual field of said night vision binoculars is adapted to that of human vision.

2. The night vision binoculars according to claim 1, **characterised in that** the optical axes of the two assemblies together form a first angle different from zero.

3. The night vision binoculars according to any of the preceding claims, **characterised in that** the two anamorphosis planes of the two bodies are parallel.

4. The night vision binoculars according to any of claims 1 to 3, **characterised in that**, with the visual fields of the objective lens and the eyepiece being circular with a diameter equal to 40 degrees, the anamorphosis ratio being equal to 0.8, the optical axes of the two bodies together form a first angle equal to 25 degrees and the two anamorphosis planes of the two bodies together form a second angle equal to 30 degrees, so as to match the binocular field of human vision.

5. The night vision binoculars according to any of the preceding claims, **characterised in that** the first anamorphoser device and/or the second anamorphoser device comprise at least one prism (P).

6. The night vision binoculars according to claim 5, **characterised in that**, when the first anamorphoser device and/or the second anamorphoser device comprise a single prism, said prism operates with minimum deflection.

7. The night vision binoculars according to any of claims 1 to 5, **characterised in that** the first anamorphoser device and/or the second anamorphoser device comprise two prisms (P, P').

8. The night vision binoculars according to claim 7, **characterised in that** the two prisms are adhered via a common face.

9. The night vision binoculars according to any of claims 7 or 8, **characterised in that** the optical indices of the first prism and of the second prism and the constringences of the first prism and of the second prism are such that the chromatism of the anamorphoser device is close to zero in a known spectral band.

10. The night vision binoculars according to any of claims 1 to 5, **characterised in that** the second anamorphoser device comprises a prism associated with a Fresnel prism ($P_F$), with the Fresnel prism comprising N identical successive elementary patterns, with the number N being low enough to avoid any phenomenon of spurious images and being large enough to avoid any shading effect.

11. The night vision binoculars according to any of the preceding claims, **characterised in that** the visual fields of the objective lens and of the eyepiece are circular with a diameter equal to 40 degrees, with the anamorphosis ratio being equal to 0.8.

12. The night vision binoculars according to claim 11, **characterised in that** the optical axes of the two bodies together form a first angle equal to 25 degrees.

13. The night vision binoculars according to one of claims 11 or 12, **characterised in that** the two anamorphosis planes of the two bodies together form a second angle equal to 30 degrees.

# FIG. 1

CHAMP DROIT      CHAMP GAUCHE      CHAMP BINOCULAIRE

# FIG. 2

$\theta/2$

$C_D$

$C_G$

Y

Y

$d_{ip}$

FIG. 3

$\phi_G$

$\phi_D$

$\phi_B$

CHAMP DROIT

CHAMP GAUCHE

CHAMP BINOCULAIRE

FIG. 4

FIG. 5

CHAMP AVANT
PRISME
OBJECTIF

CHAMP APRES
PRISME
OBJECTIF

CHAMP APRES
PRISME
OCULAIRE

FIG. 6

FIG. 7

CHAMP DE
RECOUVREMENT

CHAMP DROIT          CHAMP GAUCHE          CHAMP BINOCULAIRE

FIG. 8

# FIG. 9

CHAMP BINOCULAIRE

# FIG. 10

## FIG. 11

## FIG. 12

# FIG. 13

# FIG. 14

M_F

P'

Y

P_F

T'>T

FIG. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2721719